# EUROPEAN PATENT APPLICATION

(11) **EP 1 515 218 A1**
(43) Date of publication of application: **16.03.2005**
(21) Application number: 03020407.7
(22) Date of filing: 10.09.2003
(51) Int. Cl.: G06F 1/16

(54) **Computer case**

(71) Applicant: Lee, Kevin, Pa-The City, Tao-Yuan Hsien (TW)
(72) Inventor: Lee, Kevin, Pa-The City, Tao-Yuan Hsien (TW)
(74) Representative: VOSSIUS & PARTNER

(57) **Abstract**

A computer mainframe includes an open-topped case and a top cover provided with a handle to be easily pivotally lifted from an open top of the case. The top cover being pivotally turned to the lifted position enables convenient installation and replacement of peripherals, such as the hard disk, the CD-ROM, the interface card and the like, that are to be mounted in the case. A displaying screen may be mounted to an inner side of the top cover to enable easy movement of the whole computer mainframe to any place for use.

## Description

The present invention relates to a computer mainframe, and more particularly to a computer mainframe that has an open-topped case covered with a pivotally turnable top cover and is particularly suitable for a bare bone computer system.

With the quick advancements in the computer industry, the operation speed of the central processing unit on the main board, the storage capacity of the hard disk, and the reading speed of the CD-ROM all are constantly improved at a surprisingly quick pace. Different interface cards are therefore developed in response to the quick changes in the expansion equipment to which the interface cards are connected. Thus, it becomes a common practice for existing personal computers to substitute for internal components with new ones.

A desktop computer system is still the most popular computer adopted by consumers, and it usually includes a mainframe and many externally connected peripherals, including mouse, keyboard, monitor, and printer. Basically, the mainframe includes a rectangular internal framework, on which the main board and other indispensable components for a computer are mounted. A front cover provided with a power switch, indicating lamps, sockets, etc. is connected to a front side of the framework, and a U-shaped protective case is formed by way of, for example, stamping and punching for fixing to an outer side of the internal framework with screws, so as to enclose the whole main board in the mainframe.

When it is desired to change or replace the internal components, a user has to troublesomely loosen the screws from the case, and remove the U-shaped protective case from the internal framework. After completion of the change or replacement of the internal components, the protective case must be closed onto the internal framework and tightened in place by fastening the screws again.

Moreover, due to the popularity of miniature desktop computer, a computer system, such as the bare bone computer, that may be conveniently moved as a whole and enables a user to carry it to any place for use has become a new choice other than notebook computers.

It is therefore tried by the inventor to develop a novel mainframe that incorporates a displaying screen therewith.

A primary object of the present invention is to provide a computer mainframe having an open-topped case, and a top cover pivotally connected to the open top of the case to be lifted upward when necessary. A handle may be provided to an outer side of the top cover to enable convenient lifting of the top cover, so that internal components mounted in the case may be easily accessed for change and replacement purpose.

Another object of the present invention is to provide a computer mainframe having an open-topped case, and a top cover pivotally connected to the open top of the case to be lifted upward when necessary. A displaying screen is mounted to an inner side of the top cover to omit the necessity of connecting the mainframe to an external monitor, so that a user may conveniently carry the whole mainframe to different places for use.

The structure and the technical means adopted by the present invention to achieve the above and other objects can be best understood by referring to the following detailed description of the preferred embodiments and the accompanying drawings, wherein
Fig. 1 is an exploded perspective view of a computer mainframe according to an embodiment of the present invention;
Fig. 2 is assembled perspective view of Fig. 1; and
Fig. 3 shows a top cover for the computer mainframe of the present invention in a lifted position.

### DETAILED DESCRIPTION OF THE PREFERRED EMBODIMENTS

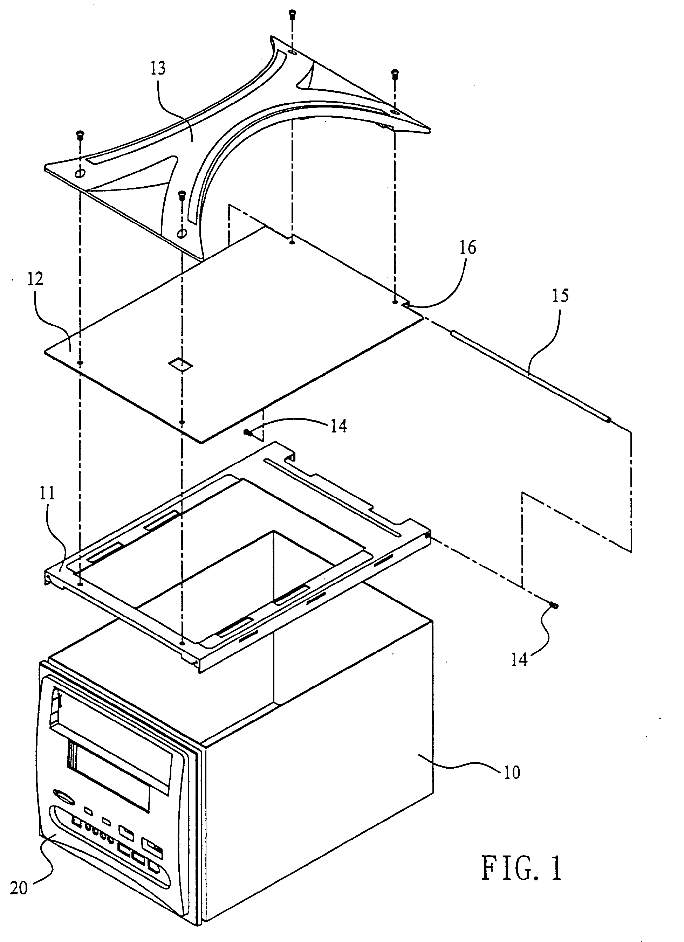

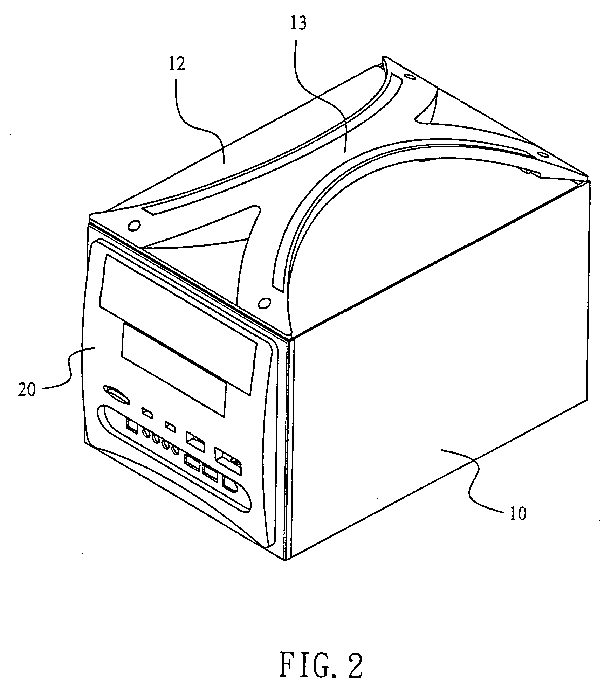

Please refer to Figs. 1 and 2 that are exploded and assembled perspective views, respectively, of a computer mainframe according to an embodiment of the present invention. As shown, the computer mainframe includes an indispensable main board, an interruptible power supply, and many other components (not shown) mounted on an internal framework thereof, an open-topped case 10 for enclosing the internal framework and the components mounted thereon, and a front cover 20 on which push buttons, indicating lamps, sockets, etc. are provided.

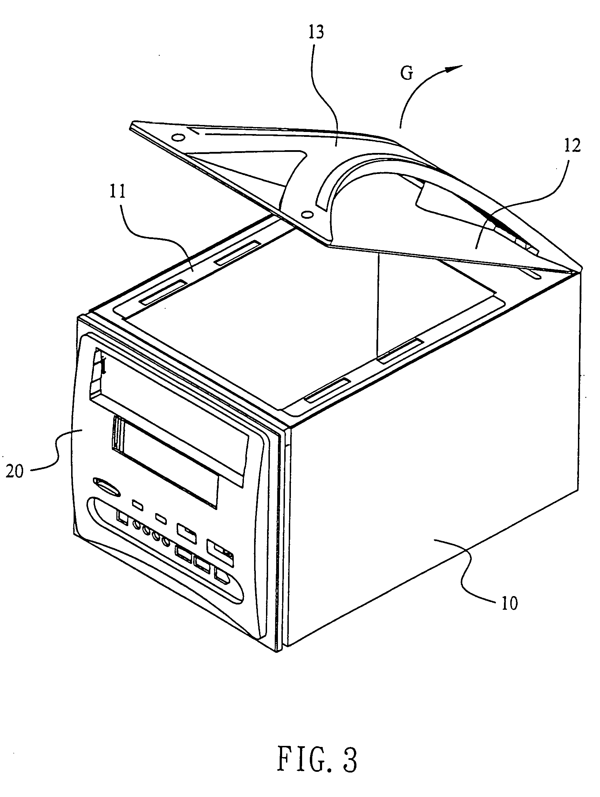

An upper frame 11 is provided at upper inner edges of the case 10. A shaft 15 is fixed to a rear end of the upper frame 11 with a pair of locating pins 14. A top cover 12 closes the open top of the case 10. A rear end of the top cover 12 is formed into a long hole 16 for receiving a middle section of the shaft 15 therein, so that the top cover 12 may be pivotally turned about the shaft 15 and be lifted from the case 10, as indicated by the arrow G in Fig. 3, to expose the open top of the case 10.

To enable easy lifting of the top cover 12, a handle 13 is provided at an upper surface of the top cover 12, such that a space large enough for fingers to extend therethrough is left between the handle 13 and the top cover 12 to allow a user to conveniently grip the handle 13 and lift the top cover 12 with only one hand.

It is understood the above-described structure is only an embodiment of the present invention. The top cover 12 may be otherwise directly connected to the upper inner edges of the case 10 by means of hinges. In other words, the connecting structure formed from the shaft 15 also belongs to one type of hinge structure.

It is to be noted that a displaying screen, such as a low-profile liquid crystal display screen, may be mounted to an inner side of the top cover 12. In this case, mechanisms for locating the displaying screen at a desired angular position, such as that being currently employed on a notebook computer, are provided on the hinge structure, so that the top cover 12 may be lifted and located at a preset angular position.

With the displaying screen mounted on the pivotally turnable top cover 12 of the case 10, the whole computer mainframe may be advantageously movable, and the internal equipment and components in the case 10 may still be easily dismounted and replaced.

Briefly speaking, the computer mainframe of the present invention enables a user to easily install or replace internal components thereof simply by lifting the top cover to expose the open top of the case 10.

## Claims

1. A computer mainframe for a desktop computer system, comprising:
an open-topped case for accommodating a main board, a power supply, an interface card and the like therein;
a front cover connected to a front side of said case and having push buttons, indicating lamps, sockets and the like provided thereon; and
a top cover for completely closing an open top of said case, said top cover being connected at a rear end to said case by means of a hinge structure, so that said top cover may be pivotally turned about said rear end to a lifted position to expose the open top of said case.

2. The computer mainframe as claimed in claim 1, further comprising a handle connected to an outer side of said top cover.

3. The computer mainframe as claimed in claim 1 or 2, further comprising a low-profile displaying screen mounted to an inner side of said top cover.

4. The computer mainframe as claimed in claim 3, wherein said case is provided at upper inner edges with an upper frame, and wherein said hinge structure includes a shaft connected to a rear end of said upper frame by means of a pair of locating pins, and a long hole formed at the rear end of said top cover to movably receive a middle section of said shaft therein.
